# EUROPEAN PATENT SPECIFICATION

(11) **EP 4 346 439 B1**
(45) Date of publication and mention of the grant of the patent: **18.06.2025**
(21) Application number: 22720060.7
(22) Date of filing: 22.04.2022
(51) Int. Cl.: A23L 5/20, A23L 19/00, A23B 7/04, A23B 7/005

(54) **METHOD FOR MANUFACTURING SLICED FROZEN VEGETABLES AND PRODUCTION LINE FOR MANUFACTURING**
VERFAHREN ZUR HERSTELLUNG VON GESCHNITTENEM GEFRORENEM GEMÜSE UND PRODUKTIONSLINIE ZUR HERSTELLUNG
PROCÉDÉ DE FABRICATION DE LÉGUMES SURGELÉS TRANCHÉS ET LIGNE DE PRODUCTION POUR FABRIQUER

(30) Priority: 26.05.2021 EP 21461542
(43) Date of publication of application: 10.04.2024
(73) Proprietor: Stawinska, Joanna, 64-100 Leszno (PL)
(72) Inventor: WYDERKA, Sebastian, 95-020 Janowka (PL); STAWINSKA, Joanna, 64-100 Leszno (PL)
(74) Representative: Bury & Bury
(86) International application number: PCT/IB2022/053786
(87) International publication number: WO 2022/248949

(56) References cited:
- CN-A- 105 595 245
- DATABASE FSTA [online] INTERNATIONAL FOOD INFORMATION SERVICE (IFIS), FRANkFURT-MAIN, DE; 2008, "Fresh ready onion and spice mix.", XP002804707, Database accession no. FS-2008-08-Jv3682
- DATABASE FSTA [online] INTERNATIONAL FOOD INFORMATION SERVICE (IFIS), FRANkFURT-MAIN, DE; 1993, BUTLER T: "Equipping yourself to stay within the law.", XP002804708, Database accession no. FS-1993-01-E-0024

## Description

### Field of the invention

The invention concerns a method for manufacturing a sliced frozen vegetables, in particular onion, shallot or garlic and a production line for manufacturing a sliced frozen vegetables, in particular onion, shallot or garlic.

### Background of the invention

The process of preparation of frozen food requires removing unnecessary parts of the raw material, preferably by mechanical means. Methods for processing of vegetables or fruits, including their machine peeling or removing other unnecessary organic components are known in the state of the art. Also various methods for obtaining sliced and frozen vegetables are known in which conventionally vegetables are peeled before being cut, like in US20080113070. CN105595245A discloses a method for producing a cut, frozen vegetable. The method comprises the steps of select fresh spinach and "water cleaning". Thereafter the spinach is cut to 4-6 cm. Then the spinach is blanched at 96°C. Thereafter the spinach is quick-frozen to below -35°C. And finally the frozen product is run through a metal detector for detecting and rejecting any metal objects. Also other methods for metal detection are discussed in the state of the art. In such conventional methods, organic contaminants are removed in the process of water cleaning. Such methods are not dedicated for vegetables with skins, as far as sole water cleaning do not result in peeling of the skins, desired in processing of bulbous vegetables such as onions or garlic.

For example in the patent US2813563 a method of processing of tomatoes is disclosed. Freezing is an initial step of processing of tomatoes before separation of the skin; freezing concerns only the surface layer of the vegetable. During separation of the skin of the tomato, the product is defrosted. The vegetables treated in the disclosed manner are not sliced.

In the document US3982037, a method of peeling fruit and vegetables is disclosed. The following examples of fruit and vegetables are disclosed in the document: peaches, apricots, nectarines, plums, cherries, grapes and tomatoes. The products are alternately heated and cooled. It was pointed, that in order to separate the skin it is necessary to heat the product - heating results in separating the skin.

In the document CN105725233 stoning of fruits - berries - after freezing is disclosed.

In the international application WO2009/079930 a method of peeling plant seeds including a plant seed cooling step is disclosed. Freezing is followed by a step of seeds selection. Invention discloses a machine enabling separation of the skin of frozen seeds.

Invention disclosed in CN109105932 includes a machine for peeling garlic. In the document an advantageous technical effect of peeling the garlic after its previous cooling is disclosed.

The document CN102429007 discloses a garlic freezing method, in which before freezing garlic is sliced and the skin is peeled.

The capacities of peeling machines are very low and the peeling process (whether manual or by machine) is laborious and expensive.

In the document FR2400847 a method of obtaining frozen tomatoes and peeled tomatoes is disclosed. The tomatoes are peeled in a frozen state.

The international application WO2007/025000 discloses a method of cryogenic peeling of fruits or vegetables. In the method according to the invention the surface of the fruit or the vegetable is frozen cryogenically. The key step of the process is defrosting of the skin before its separation. The partially frozen fruit/vegetable is heated e.g. in a hot water bath for a certain period of time. Indicated temperature range, to which the skin should be heated is about 15 - 100°C. In the application the possibility of an initial incision of the skin in order to its softening is indicated. Such incision enables subsequent squeezing the vegetable out of the skin and obtaining final flesh. The vegetables subjected to the processing according to the disclosed method are not sliced.

The invention disclosed in DE2216906 includes a method of processing, especially fruits. Semi-finished products are frozen as a whole, and then they are subjected to the processing aiming at i.e. removing the stones from inside the fruit.

The objective of the invention was to develop a method of processing vegetables, in order to obtain a sliced frozen vegetables free of organic contaminants as a final effect, without the classical step of peeling using industrial peelers. In particular, the objective of the invention was to develop a method, which will allows to obtain sliced frozen vegetables - onion, shallot and garlic, devoid of skins and other contaminants. The objective of the invention was also to develop a production line to realize this method, devoid of low-performing peeling machines.

### Summary of the invention

A method for manufacturing a sliced frozen onion, shallot or garlic, comprising cleaning, slicing and freezing of a raw material, according to the invention is characterized in that the unnecessary organic components are removed, at least partly mechanically, from the raw material which was first sliced and then frozen. Unexpectedly during tests it turned out, that unnecessary organic components in the raw material first sliced and then frozen can be easily removed. Performing the slicing step and the freezing step before the step of removing unnecessary organic components allows for abandonment of a step of peeling with an use of the industrial peelers, and as a result a simplification of the production line and a reduction of the manufacturing time of frozen vegetables is possible.

Advantageously, in the method according to the invention, the raw material is frozen to a temperature between -50°C do -5°C. Freezing of the raw material before removing the organic components allows for easier removal of the organic components, which are still present on the raw material after slicing (e.g. skins). Particularly advantageously is to freeze the raw material to a temperature between -35°C and -18°C, and even more advantageously to a temperature between -22°C and -18°C. In justified cases, an initial freezing is advantageous, and then freezing the raw material to the desired temperature.

Advantageously, the unnecessary organic components are removed at temperatures below zero, advantageously not higher than -4°C. By maintaining a negative temperature of the raw material during removing of the unnecessary organic components it is easier to remove those components and contaminants.

Advantageously, the unnecessary organic components are removed through of at least one process selected from: shaking, air sorting, optical sorting followed by air blowing, laser sorting followed by air blowing, sorting with an use of LED diodes followed by air blowing. Those processes can be combined in any order. Using more processes or cascading of the same processes allow for more effective removing of the unnecessary organic components.

Advantageously, cleaning of the raw material includes washing of the raw material.

Advantageously, before freezing of the raw material, a heat treatment of the raw material is carried out at the temperatures between 50 and 100°C. The heat treatment of the raw material may be carried out by blanching, boiling or steaming. Advantageously, after the heat treatment, the raw material is cooled, so that its temperature is closer to the final temperature in the freezing step.

Advantageously, before freezing of the raw material, a disinfection of the raw material is carried out.

A production line for manufacturing a sliced frozen onion, shallot or garlic, comprising a pre-treatment line, a line for at least partly mechanically removing of unnecessary organic components and a freezing station according to the invention is characterized in that the pre-treatment line comprises a raw material cleaning station and a raw material slicing station while the freezing station is situated between the pre-treatment line and the line for at least partly mechanically removing of unnecessary organic components such that at least partially mechanical removing of unnecessary organic components is carried out on the sliced and frozen raw material.

Advantageously the pre-treatment line comprises an inspection table.

Advantageously the pre-treatment line comprises a washing station of the raw material.

Advantageously, the pre-treatment line comprises a disinfection station of the raw material.

Advantageously, the freezing station comprises a station chosen from: a fluidization tunnel and/or a static freezing chamber.

Advantageously, the line for at least partly mechanically removing of unnecessary organic components comprises at least one station chosen from: a shaking station, air sorting station, a station for optical sorting followed by air blowing, a station for laser sorting followed by air blowing, a station for sorting with the use of LED diodes followed by air blowing.

Advantageously, the pre-treatment line comprises a station for heat treatment of the raw material at the temperature between 50 and 100°C.

A production line according to the invention allows in particular realization of the method according to the invention of manufacturing sliced frozen vegetables, in particular onion, shallot or garlic. A production line according to the invention is cheaper and more efficient than lines known in the state of the art, because the processed raw material is not subjected to the processing in expensive and ineffective industrial peelers.

### Short description of the figures

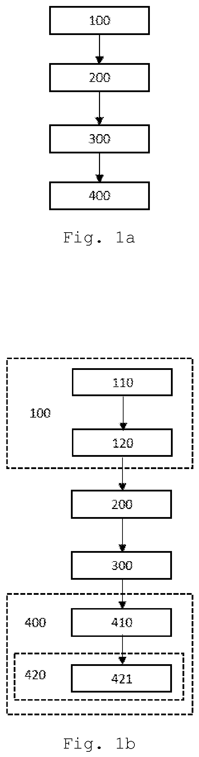

The invention is described below in more details with reference to its embodiments, presented in the attached drawings, in which
Fig. 1a presents a block diagram of the steps of the manufacturing method of the sliced frozen vegetables, according to the invention,
Fig. 1b presents a block diagram of the steps of the manufacturing method of the sliced frozen vegetables, according to one of the embodiments,

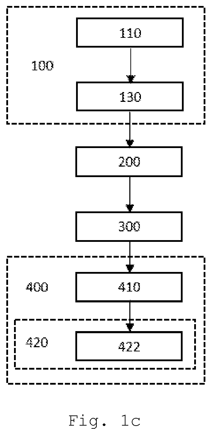

Fig. 1c presents a block diagram of the steps of the manufacturing method of the sliced frozen vegetables, according to another embodiment,
Fig. 1c presents a block diagram of the steps of the manufacturing method of the sliced frozen vegetables, according to another embodiment,
Fig. 2a presents a simplified block diagram of the production line according to the invention,
Fig. 2b-d present embodiments of the pre-treatment line,
Fig. 3a presents a block diagram of the production line according to one of the embodiments,
Fig. 3b presents a fragment of the figure 3a - an embodiment of the line for at least partly mechanically removing of unnecessary organic components,
Fig. 3c presents other view of the production line according to another embodiment.

### Description of the embodiments of the invention

### Embodiment 1

White onions are used as raw material in one embodiment of the invention (e.g. Allium Cepa L. Cepa Group - Onion, Echalion) . Parameters of the method giving good results are summarized in Tab. 1, and a block diagram of the steps of the method according to this embodiment of the invention is presented in Figs 1a and 1b.

For manufacturing frozen vegetables it is advisable to use good quality vegetables of consumable maturity, which are uniform in variety in lots, fresh, hard, reasonably uniform in size and colour, healthy, not mechanically damaged, free of chemical plant protection agent residues, free of extraneous odours and tastes.

Good effects were obtained for the onion which was clean, whole, dry, free from chives, free from all signs of mould, rot and disease discoloration, healthy, hard, free from pests, free from external moisture, free from frost, free from foreign smell and taste, and stored properly.

In the first step of the method according to the invention, cleaning **100** of the raw material is performed. Cleaning **100** includes in particular washing **110,** which is performed by an water-air cleaner. The person skilled in the art routinely chooses water pressure depending on the type and quality of the vegetables used.

Washed raw material is subjected to disinfection **120.** Good effects were obtained as well as while treating the raw material with a product listed below or with a solution of the product, either directly or using products diluted in water. Good effects were obtained by performing disinfection with a mixture of peracetic acid with hydrogen peroxide, whereas the person skilled in the art will routinely propose other products for this purpose.

In the next step the raw material is sliced **200.** For slicing, industrial slicing machines for vegetables are used. In this embodiment, onion was sliced into cubes of side dimensions 6 mm. It was shown in experiments, that the cubes with the dimensions in the range of 4 mm to 20 mm performed equally well, in particular the cubes with the dimensions 5 mm, 6mm, 10 mm performed well. The size of the cube is dictated by the needs of the recipient of the resulting material, the person skilled in the art routinely sets the parameters of the machine to obtain the cubes with the desired side dimension.

Good results were obtained also for the raw material cut into slices. The method according to the invention gave good results for the slices with the thickness of 2 to 8 mm, the slices with the thickness of 2 mm, 2,5 mm, 3 mm, 4 mm, 5 mm, 6 mm, 7 mm, 8 mm performed well in particular. The thickness of the slice is dictated by the needs of the recipients of the resulting material, the person skilled in the art routinely sets the parameters of the machine (e.g. electrical industrial slicer) so that to obtain the cubes with the desired thickness slices.

In the method according to the invention the raw material having skin and other organic components is sliced.

Then the sliced raw material is frozen in the freezing step **300** up to temperature -18°C. Experiments showed, that the temperature on the range of -50°C to - 5°C gives good results. In particular good effects were obtained for the temperature of freezing below -18°C. In the justified situation a higher temperature of the raw material assuming post-freezing in refrigerating chambers is allowed. Onion freezing in this embodiment was realized by a passage of the raw material through a fluidization tunnel.

In the next step **400** organic components in the form of skins and other contaminants, present in sliced and frozen raw material, are removed. Surprisingly it turned out, that thanks to earlier implementation of slicing **200** and freezing **300,** it is possible to obtain sliced frozen vegetables particularly efficiently, because the use of industrial peelers is not necessary.

Removing **400** of the unnecessary organic components is realized on the raw material, which temperature is below -6°C. Good effects were obtained in particular when the temperature was below 0°C, in particular not higher than -4°C.

In such realization of the method, the skins are removed from the raw material which is frozen and sliced. This means, that, before the step **400,** fragments of the skins were still present on the raw material, that did not fall off during slicing. The raw material after the step **400** is still frozen.

In this embodiment, the skins of the onions are removed by shaking (e.g. on sieves) **410.** Good effects were obtained by using vibration calibrators - single, double or multi deck, e.g. triple deck.

Good effects were obtained, when the raw material was evenly distributed to the free-fall chute after shaking on the sieves. The raw material was directed downwards towards a control zone, where it was scanned (optical sorting **420**), e.g. by lasers (laser sorting **421**), cameras, BSI or BSI+ (Biometric Signature Identification) or their combination.

Organic components in the form of the skins and if need be other contaminants are hit with a precise powerful burst of air (blowing), which directs them into the rejection zone, while the good raw material continues its natural process of free falling.

Such prepared material is packaged. At every step, whether it is after or before the cleaning step **100,** slicing **200,** freezing **300,** removing **400** unnecessary organic components it is possible to use the inspection by a worker with the use of inspection tables. However experiments showed, that it is not necessary, because the method according to the invention is characterized by very high effectiveness.

Experiments with onion showed, that by the use of the method it is possible to obtain sorting of the organic components. Experiment showed that it is possible to obtain reject lower than 20% of the initial weight of the raw material.

In turn experiments with red onion with the side dimension of the cube equal to 10 mm showed, that with the use of the method it is possible to obtain sorting of the organic components. Experiment showed that it is possible to obtain reject lower than 2% of the initial weight of the raw material.

**Tab. 1**

| Step | | Step parameters |
|---|---|---|
| Raw material cleaning **100** | | |
| | Washing **110** | Water-air cleaner |
| | Disinfection **120** | Disinfection with a mixture of peracetic acid with hydrogen peroxide |
| Slicing **200** | | Cubes with the side dimension 6 mm |
| Freezing **300** | | -18°C |
| Removing **400** unnecessary organic components | | |
| | Shaking **410** | |
| | Optical sorting **420** | Triple-deck callibrator Optical sorting **421** with blowing |
| | | |
| | Temperature of the raw material during the step | |
| | | Below -6°C |

### Embodiment 2

Shallotes were used as raw material in one embodiment of the invention (e.g. Allium Cepa L. Aggregatum Group - Shallot). Parameters of the method which results in good effects are summarized in Tab. 2, and a block diagram of the steps of the method according to this embodiment of the invention are presented in Fig. 1a and Fig. 1c.

Good effects were obtained for the shallot which was clean, whole, dry, free from chives, free from all signs of mould, rot and disease discoloration, healthy, hard, free from pests, free from external moisture, free from frost, free from foreign smell and taste, and stored properly.

In the first step of the method according to the invention, cleaning **100** of the raw material is performed. Cleaning **100** includes in particular washing **110.** Washing **110** was performed under a water spray. In most cases, washing is sufficient to obtain good results of cleaning **100.**

Washed raw material is subjected to heat treatment **130.** Heat treatment is that the raw material, whole or sliced, is blanched or boiled (blanching, boiling in water or by steam) at temperature of 50 to 100°C.

Good effects were obtained by performing heat treatment both by blanching whole shallots at temperature 85-95°C for 2-4 min or by boiling it for 1-3 minutes. Good effects were obtained also thanks to subsequent cooling of the blanched shallot in a cooling tank, i.e. device, to which very cold water is fed. As a result the raw material has lower temperature before the freezing step **300.** If the duration of the process is not crucial, cooling is not necessary.

Such prepared raw material is sliced **200** in the next step. In this embodiment shallot was sliced into cubes with the side dimension 5 mm by means of an industrial slicer for vegetables.

The sliced raw material is frozen **300** to temperature of -20°C. Freezing of the shallot in this embodiment was realized by using a static freezing chamber. Good effects were obtained in particular for the freezing temperature in the range of -18°C to -22°C.

Next, in the step **400** organic components in the form of skins and are removed, which are present in the sliced and frozen raw material.

Removing **400** unnecessary organic components is realized with the raw material, whose temperature is lower than -4,5°C.

In such realization of the method, the skins are removed from the raw material which is frozen and sliced. This means, that on the raw material, before the step **400,** there were still the fragments of the skins, that did not fall off during slicing. The raw material after the step **400** is still frozen.

In this embodiment shaking **410** is performed first - input shaker evenly distributes the raw material on the free-fall chute.

Then the raw material is directed downwards towards the control zone, where it is scanned by a special set of various pulsing LED diodes and a combination of cameras (optical sorting with the use of LED diodes **422**).

Organic components in the form of the skins and if need be other contaminants are hit with a precise powerful burst of air (blowing), which directs them into the rejection zone, while the good raw material continues its natural process of free falling.

Good effects are possible to be obtained by means of sorting with the use of air, e.g. by using a winnower, e.g. after shaking and before optical sorting. It is also clear that in the step of removing **400** unnecessary organic components, which can comprise steps like shaking, air sorting , optical sorting, laser sorting, optical sorting with the use of LED diodes, blowing, those steps can be repeated what will result in a greater precision of removing organic components out of the raw material. Application of at least one of listed steps will result in satisfactory results.

Experiments with shallot showed, that by the use of the method it is possible to obtain sorting of the organic components . Experiment showed that it is possible to obtain reject lower than 4% of the initial weight of the raw material.

**Tab. 2**

| Step | | Step parameters |
|---|---|---|
| Raw material cleaning **100** | | |
| | | |
| | Washing **110** | Washing under water spray |
| | | |
| | Heat treatment **130** | Blanching whole shallots at temperature 85-95°C for 2-4 min or by boiling it for 1-3 minutes and then cooling in cooling tank with cold water |
| Slicing **200** | | Cubes with side dimension 5 mm |
| Freezing **300** | | -20°C |
| Removing **400** unnecessary organic components | | |
| | | |
| | Shaking **410** | |
| | Optical sorting **420** | Shaker |
| | | Sorting with the use of LED diodes **422** with blowing |
| | | |
| | | Below -4,5°C |
| | Raw material temperature during the step | |

### Embodiment 3

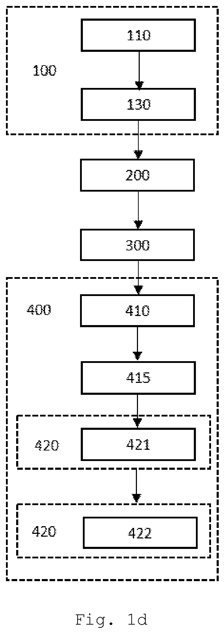

Garlic is used as raw material in one embodiment of the invention (e.g. Allium sativum L. - Garlic). Parameters of the method which result in good effects are summarized in Tab. 3, and a block diagram of the steps of the method according to this embodiment of the invention are presented in Fig. 1a and Fig. 1d.

Good effects were obtained for the garlic which was clean, whole, dry, free from chives, free from all signs of mould, rot and disease discoloration, healthy, hard, free from pests, free from external moisture, free from frost, free from foreign smell and taste, and stored properly.

In the first step of the method according to the invention, cleaning **100** of the raw material is performed. Cleaning **100** includes in particular washing **110.** Washing **110** was performed in a tank.

Washed raw material is subjected to heat treatment **130.** Good effects were obtained by performing heat treatment of the garlic by its blanching using water vapour. Good effects were obtained also thanks to subsequent cooling of the blanched garlic in a cooling tank, i.e. device, to which very cold water is fed. Thanks to that the raw material has lower temperature before the step of freezing **300.** If the duration of the process is not crucial, cooling is not necessary. It is also possible to perform both disinfection and heat treatment, in any order.

Such prepared raw material is sliced **200** in the next step. In this embodiment garlic was sliced into cubes with the side dimension 4 mm by means of industrial slicer for vegetables. Good effects were also obtained for the garlic sliced into cubes with the side dimension 3 mm, 5 mm, 6 mm, 10 mm.

Sliced raw material is frozen **300** to a temperature of -35°C. Freezing of the garlic in this embodiment was realized by using a static freezing chamber. Good effects were obtained in particular for the freezing temperature in the range of -45°C to -35°C.

Next, in the step **400** organic components in the form of skins, which are present in sliced and frozen raw material.

Removing **400** unnecessary organic components is realized with the raw material, whose temperature is lower than -7°C.

In such realization of the method, the skins are removed from the raw material which is frozen and sliced. This means, that on the raw material, before the step **400,** there were still the fragments of the skins, that did not fall off during slicing. The raw material after the step **400** is still frozen.

In this embodiment first shaking **410** is performed - input shaker evenly distributes the raw material on the free-fall chute.

Then the raw material is air sorted **415,** e.g. by using a winnower.

Then the raw material is directed downwards towards the control zone, where it is scanned (optical sorting **420**), e.g. by lasers (laser sorting **421**), cameras, BSI or BSI+ (Biometric Signature Identification) or their combination.

Organic components in the form of the skins and if need be other contaminants are hit with a precise powerful burst of air (blowing), which directs them into the rejection zone, while the good raw material continue their natural process of free falling.

Then the raw material is directed downwards towards the control zone, where it is scanned by a special set of various pulsing LED diodes and a combination of cameras (optical sorting with the use of LED diodes **422**).

Organic components in the form of the skins and if need be other contaminants are hit with a precise powerful burst of air (blowing), which directs them into the rejection zone, while the good raw material continues their natural process of free falling.

Cascade arrangement of the steps of optical sorting: laser sorting and sorting with the use of LED diodes allows particularly effective separation of foreign bodies, but also residues from mechanical preparation - mainly in the form of loose skins (organic components), its fragments adhered to the good raw material or cross-contaminations.

This is how the relatively low, acceptable level of reject is obtained. Preliminary mechanical cleaning of the raw material (e.g. during washing) or using air sorting (e.g. by using a winnower) after shaking allows for further limitation of defects concentration in a final product.

The raw material is packaged and further stored under appropriate conditions.

**Tab. 3**

| Step | | Step parameters |
|---|---|---|
| Raw material cleaning **100** | | |
| | Washing **110** | Washing in a tank |
| | Heat treatment **130** | Blanching using water vapour and then cooling in a cooling tank with a cold water |
| Slicing **200** | | Cubes with side dimension 4 mm |
| Freezing **300** | | -35°C |
| Removing **400** unnecessary organic components | | |
| | Shaking **410** | |
| Sorting with the use of air **415** | | Shaker |
| | | Winnower |
| | Optical sorting **420** | |
| | Optical sorting **420** | Laser sorting **421** with blowing |
| | | Laser sorting with the use of LED diodes **422** with blowing |
| | Raw material temperature during the step | Below -7°C |

### Embodiment 4

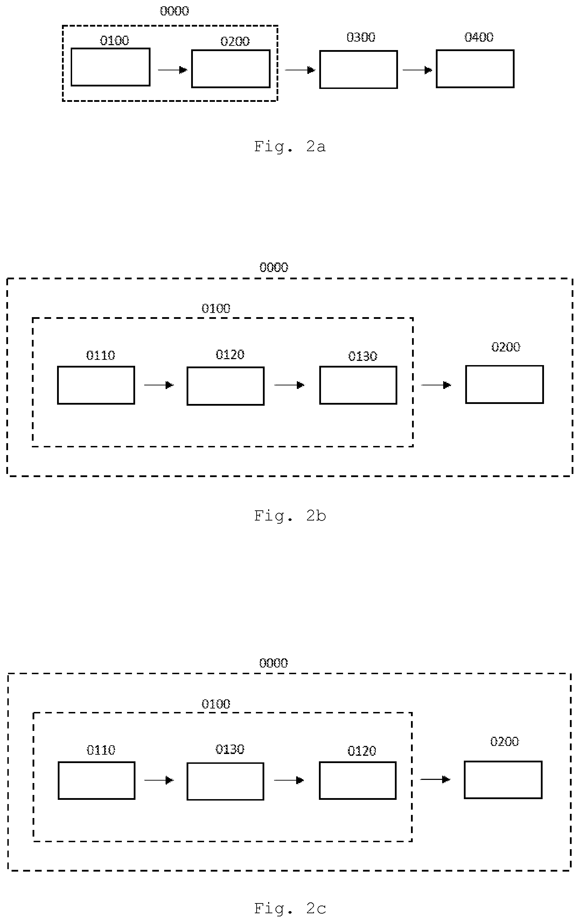

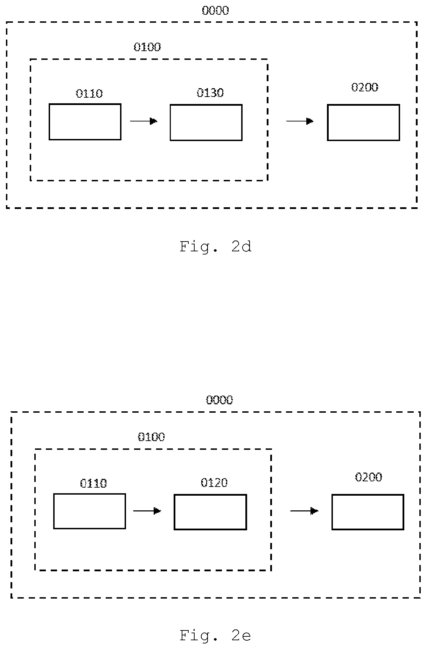

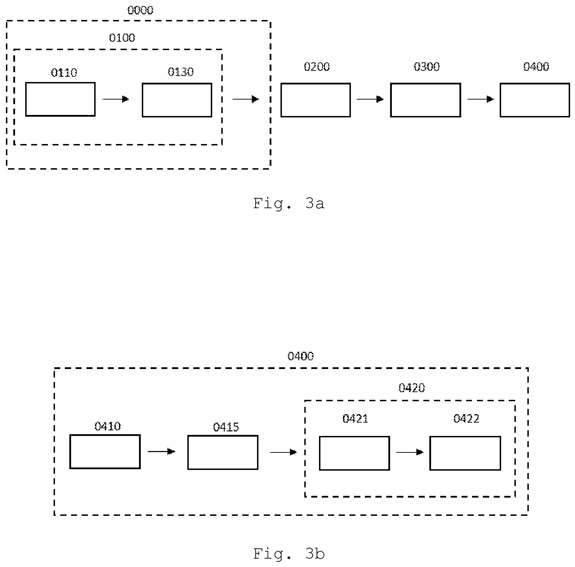

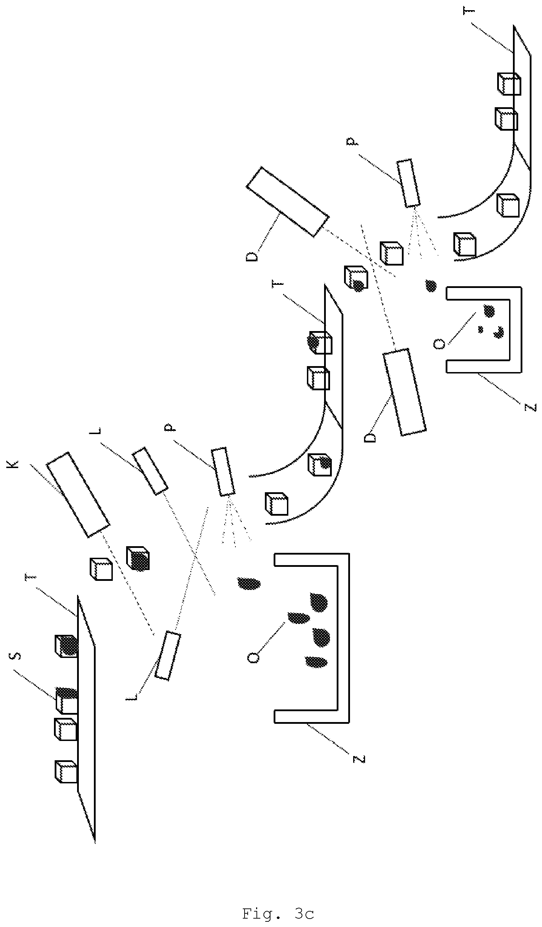

Embodiment of the production line according to this embodiment of invention is presented in Fig. 2a and Fig. 3a-c.

The production line according to this embodiment allows for realization the method according to the invention according to the embodiment 3.

The production line for manufacturing sliced frozen vegetables, in particular onion, shallot or garlic, comprises a pre-treatment line **0000.** The production line comprises further a line **0400** for at least partly mechanically removing of unnecessary organic components and a freezing station **0300.**

The pre-treatment line **0000** comprises further a raw material cleaning station **0100** and a raw material slicing station **0200.**

A freezing station **0300** is situated between the pre-treatment line **0000** and the line **0400** for at least partly mechanically removing of unnecessary organic components such that at least partially mechanical removing of unnecessary organic components is carried out on the raw material which is sliced and frozen.

Transport of the raw material between particular lines and stations is realized by chutes known-in-the-art, belt conveyors, feeders or other transport equipment allowing a transport of the raw material.

The cleaning station **0100** in this embodiment comprises a washing station **0110** and a station for heat treatment of the raw material **0130.** Washing station **0110** is realized by using a tank, in which the raw material is rinsed. The station for heat treatment of the raw material **0130** in principle allows the heat treatment of the raw material at the temperature of 50 to 100°C. In this embodiment stand for the heat treatment of the raw material **0130** comprises a device for blanching using water vapour. Good effects were obtained by providing a cooler, in the form of a device to which very cold water is fed, behind the device for blanching with the use of water vapour.

The raw material is directed from the cleaning station **0100** to the slicing station **0200.** The slicing station can be realized e.g. by using industrial slicers or shredders.

The raw material is directed to the freezing station **0300** from the slicing station **0200.** In this embodiment the freezing station **0300** comprised static freezing chamber. Good effects may be achieved also by using fluidization tunnels. It is also possible to realize the refrigerated chambers enabling post-freezing of the raw material. The freezing station **0300** allows for obtaining the raw material temperature in the rage of -50°C to -5°C.

The raw material is directed from the freezing station **0300** to the line **0400** for at least partly mechanically removing of unnecessary organic components. Good effects can be achieved if, during the stay of the raw material on the line **0400** for at least partly mechanically removing of unnecessary organic components, the temperature of the raw material does not exceed -4°C, in this embodiment -7°C. Exceeding this temperature can result in decreased effectiveness of the process, but not necessarily below an acceptable value.

Fragments of the skins, that did not fall off during slicing are still present in the raw material (sliced and frozen), directed to the line **0400** for at least partly mechanically removing of unnecessary organic components.

In this embodiment, the raw material passing through the line **0400** for at least partly mechanically removing of unnecessary organic components, is directed subsequently to:
a shaking station **0410** in this embodiment realized by a device - a shaker, which evenly distributes the raw material, which is then directed to
a station for air sorting **0415,** e.g. by a device - a winnower
a station for optical sorting **0420** - a station for laser sorting - the raw material **S** is scanned by cameras **K** and lasers **L** and then the organic components in the form of skins and if need be other contaminants forming reject **O** are hit with a precise, powerful burst of air using a precise air gun **P** (blowing), which directs them to the reject zone - reject tank **Z,** while the good raw material **S** is directed to the feeder **T** and then to
a station for optical sorting **0420** - station for sorting with the use of LED diodes - the raw material **S** is scanned by the set of pulsing LED diodes integrated with cameras **D** and then the organic components in the form of skins and if need be other contaminants forming reject **O** are hit with a precise, powerful burst of air using a precise air gun **P** (blowing), which directs them to the reject zone - reject tank **Z,** while the good raw material **S** is directed to the feeder **T** and then to packaging, storing etc.

Although in this embodiment the sorting stations are multiplied, it will be clear for the person skilled in the art, that a change of number/order of sorting stations is possible. For the person skilled in the at it will be also clear, that increasing the number of the sorting station allows achieving better results.

For the person skilled in the art such modification of the pre-treatment line **0000** is also clear a that e.g. a disinfection station **0120** is added - instead of, before or after the heat treatment station of the raw material **0130** (see Fig. 2b-2e). Such modified line allows realization of the method according to the embodiment 1 or 2 of the invention.

At any location of the production line an inspection table may be used (not shown in figures), in particular in the pre-treatment line **0000,** between the pre-treatment line **0000** and the freezing station **0300,** between freezing station **0300** and a line **0400** for removing at least partially mechanically the organic components or after the line **0400** for removing at least partially mechanically the organic components. Using the inspection table is not necessary; operation of the invention gives good results without using it. Using the inspection table gives good results, if the pre-treatment line **0000** comprises the inspection table.

### List of reference signs

100 cleaning
   110 washing
   120 disinfection
   130 heat treatment
200 slicing
300 freezing
400 removing of unnecessary organic components
   410 shaking
   415 air sorting
   420 optical sorting followed by air blowing
      421 laser sorting followed by air blowing
      422 sorting with an use of LED diodes followed by air blowing
0000 pre-treatment line
   0100 cleaning station
      0110 washing station
      0120 disinfection station
      0130 station for heat treatment of the raw material at temperature of 50 to 100°C
   0200 slicing station
0300 freezing station
0400 line for at least partly mechanically removing of unnecessary organic components
   0410 shaking station
   0415 station for air sorting
   0420 station for optical sorting followed by air blowing
      0421 station for laser sorting followed by air blowing
      0422 station for sorting with the use of LED diodes followed by air blowing
S raw material
O reject
T feeder - transport
L laser
K camera
D LED diodes integrated with cameras
Z reject tank
P precise air gun

## Claims

1. A method for manufacturing sliced frozen vegetables, containing unnecessary organic components in the form of skins, comprising cleaning (**100**), slicing (**200**) and freezing (**300**) of a raw material, **characterized in that** unnecessary organic components are removed (**400**), at least partly mechanically, from the raw material which was first sliced and then frozen.

2. A method according to claim 1 **characterized in that** the raw material is frozen (**300**) to the temperature between -50°C to -5°C.

3. A method according to claim 1 or 2 **characterized in that** the unnecessary organic components are removed (**400**) at temperatures not higher than -4°C.

4. A method according to claim 1 or 2 or 3 **characterized in that** the unnecessary organic components are removed (**400**) from the raw material through of at least one process selected from: shaking (**410**), air sorting (**415**), optical sorting (**420**) followed by air blowing, laser sorting (**421**) followed by air blowing, sorting with an use of LED diodes (**422**) followed by air blowing.

5. A method according to claim 1 or 2 or 3 or 4 **characterized in that** cleaning (**100**) of the raw material includes washing of the raw material (**110**).

6. A method according to claim 1 or 2 or 3 or 4 or 5 **characterized in that** before freezing (**300**) of the raw material, a heat treatment (**130**) of the raw material is carried out at the temperatures between 50 and 100°C.

7. A method according to claim 1 or 2 or 3 or 4 or 5 or 6 **characterized in that** before freezing (**300**) of the raw material, a disinfection (**120**) of the raw material is carried out.

8. A production line for manufacturing sliced frozen vegetables, containing unnecessary organic components in the form of skins, comprising a pre-treatment line (**0000**),
a line for at least partly mechanically removing of unnecessary organic components (**0400**) and a freezing station (**0300**)
**characterized in that**
the pre-treatment line (**0000**) further comprises a raw material cleaning station (**0100**) and a raw material slicing station (**0200**) whereas a freezing station (**0300**) is situated between a pre-treatment line (**0000**) and the line (**0400**) for at least partly mechanically removing of unnecessary organic components such that at least partially mechanical removing of unnecessary organic components is carried out on the sliced and frozen raw material.

9. A production line according to claim 8, **characterized in that** the pre-treatment line (**0000**) comprises an inspection table.

10. A production line according to claim 8 or 9, **characterized in that** the pre-treatment line (**0000**) comprises a raw material washing station (**0110**).

11. A production line according to claim 8 or 9 or 10, **characterized in that** the pre-treatment line (**0000**) comprises a raw material disinfection station (**0120**).

12. A production line according to claim 8 or 9 or 10 or 11, **characterized in that** the freezing station comprises a station chosen from: a fluidization tunnel and/or a static freezing chamber.

13. A production line according to any of claim 8 to 12, **characterized in that** the line for at least partly mechanically removing (**0400**) of unnecessary organic components comprises at least one of the station chosen from: a shaking station (**0410**), a station for air sorting (**0415**), a station for optical sorting followed by air blowing (**0420**), a station for laser sorting followed by air blowing (**0421**), a station for sorting with the use of LED diodes followed by air blowing (**0422**).

14. A production line according to any of claim 8 to 13, **characterized in that** the pre-treatment line (**0000**) comprises a station for heat treatment (**0130**) of the raw material at the temperature between 50 and 100°C.

## Patentansprüche

1. Verfahren zur Herstellung von in Scheiben geschnittenem gefrorenem Gemüse, das unnötige organische Bestandteile in Form von Schalen enthält, umfassend das Reinigen (**100**), Schneiden (**200**) und Gefrieren (**300**) eines Rohmaterials, **dadurch gekennzeichnet, dass** unnötige organische Bestandteile zumindest teilweise mechanisch aus dem Rohmaterial entfernt werden (**400**), das zuerst in Scheiben geschnitten und dann gefroren wurde.

2. Verfahren nach Anspruch 1, **dadurch gekennzeichnet, dass** das Rohmaterial auf eine Temperatur zwischen -50°C und -5°C eingefroren (**300**) wird.

3. Verfahren nach Anspruch 1 oder 2, **dadurch gekennzeichnet, dass** die unnötigen organischen Bestandteile bei Temperaturen von nicht mehr als -4°C entfernt werden (**400**).

4. Verfahren nach Anspruch 1 oder 2 oder 3, **dadurch gekennzeichnet, dass** die überflüssigen organischen Bestandteile aus dem Rohmaterial durch mindestens ein Verfahren entfernt werden (**400**), das ausgewählt ist aus: Schütteln (**410**), Luftsortierung (**415**), optischer Sortierung (**420**) mit anschließendem Luftblasen, Lasersortierung (**421**) mit anschließendem Luftblasen, Sortierung unter Verwendung von LED-Dioden (**422**) mit anschließendem Luftblasen.

5. Verfahren nach Anspruch 1 oder 2 oder 3 oder 4, **dadurch gekennzeichnet, dass** die Reinigung (**100**) des Rohmaterials das Waschen des Rohmaterials (**110**) umfasst.

6. Verfahren nach Anspruch 1 oder 2 oder 3 oder 4 oder 5, **dadurch gekennzeichnet, dass** vor dem Einfrieren (**300**) des Rohmaterials eine Wärmebehandlung (**130**) des Rohmaterials bei Temperaturen zwischen 50 und 100°C durchgeführt wird.

7. Verfahren nach Anspruch 1 oder 2 oder 3 oder 4 oder 5 oder 6, **dadurch gekennzeichnet, dass** vor dem Gefrieren (**300**) des Rohmaterials eine Desinfektion (**120**) des Rohmaterials durchgeführt wird.

8. Produktionslinie zur Herstellung von in Scheiben geschnittenem gefrorenem Gemüse, das unnötige organische Bestandteile in Form von Schalen enthält, umfassend eine Vorbehandlungslinie (**0000**),
eine Anlage zur zumindest teilweisen mechanischen Entfernung von überflüssigen organischen Bestandteilen (**0400**) und eine Gefrierstation (**0300**)
**dadurch gekennzeichnet, dass**
die Vorbehandlungslinie (**0000**) ferner eine Rohmaterialreinigungsstation (**0100**) und eine Rohmaterialschneidestation (**0200**) umfasst, während eine Gefrierstation (**0300**) zwischen einer Vorbehandlungslinie (**0000**) und der Linie (**0400**) zur zumindest teilweisen mechanischen Entfernung unnötiger organischer Bestandteile angeordnet ist, so dass die zumindest teilweise mechanische Entfernung unnötiger organischer Bestandteile an dem geschnittenen und gefrorenen Rohmaterial durchgeführt wird.

9. Produktionslinie nach Anspruch 8, **dadurch gekennzeichnet, dass** die Vorbehandlungslinie (**0000**) einen Inspektionstisch umfasst.

10. Produktionslinie nach Anspruch 8 oder 9, **dadurch gekennzeichnet, dass** die Vorbehandlungslinie (**0000**) eine Rohmaterialwaschstation (**0110**) umfasst.

11. Produktionslinie nach Anspruch 8 oder 9 oder 10, **dadurch gekennzeichnet, dass** die Vorbehandlungslinie (**0000**) eine Rohmaterialdesinfektionsstation (**0120**) umfasst.

12. Produktionslinie nach Anspruch 8 oder 9 oder 10 oder 11, **dadurch gekennzeichnet, dass** die Gefrierstation eine Station umfasst, die ausgewählt ist aus: einem Fluidisierungstunnel und/oder einer statischen Gefrierkammer.

13. Produktionslinie nach einem der Ansprüche 8 bis 12, **dadurch gekennzeichnet, dass** die Linie zum zumindest teilweisen mechanischen Entfernen (**0400**) von unnötigen organischen Bestandteilen mindestens eine der Stationen umfasst, die ausgewählt ist aus: eine Schüttelstation (**0410**), eine Station für die Luftsortierung (**0415**), eine Station für die optische Sortierung mit anschließendem Ausblasen (**0420**), eine Station zur Lasersortierung mit anschließendem Ausblasen (**0421**), eine Station für die Sortierung mit Hilfe von LED-Dioden, gefolgt von Luftblasen (**0422**).

14. Produktionslinie nach einem der Ansprüche 8 bis 13, **dadurch gekennzeichnet, dass** die Vorbehandlungslinie (**0000**) eine Station zur Wärmebehandlung (**0130**) des Rohmaterials bei einer Temperatur zwischen 50 und 100°C umfasst.

## Revendications

1. Procédé de fabrication de légumes tranchés surgelés, contenant des composants organiques non nécessaires sous la forme de peaux, comprenant le nettoyage (**100**), le tranchage (200) et la surgélation (**300**) d'une matière brute, **caractérisé en ce que** les composants organiques non nécessaires sont enlevés (**400**), au moins partiellement mécaniquement, de la matière brute qui a été en premier lieu tranchée puis surgelée.

2. Procédé selon la revendication 1, **caractérisé en ce que** la matière brute est surgelée (**300**) jusqu'à la température entre -50°C à 5°C.

3. Procédé selon la revendication 1 ou 2, **caractérisé en ce que** les composants organiques non nécessaires sont enlevés (**400**) à des températures non supérieures à 4°C.

4. Procédé selon la revendication 1 ou 2 ou 3, **caractérisé en ce que** les composants organiques non nécessaires sont enlevés (**400**) de la matière brute au moyen d'au moins un processus sélectionné parmi: le secouage (**410**), le tri par air (**415**), le tri optique (**420**) suivi par le soufflage d'air, le tri au laser (**421**) suivi par le soufflage d'air, le tri en utilisant des diodes LED (**422**) suivi par le soufflage d'air.

5. Procédé selon la revendication 1 ou 2 ou 3 ou 4, **caractérisé en ce que** le nettoyage (**100**) de la matière brute inclut le lavage de la matière brute (**110**).

6. Procédé selon la revendication 1 ou 2 ou 3 ou 4 ou 5, **caractérisé en ce que,** avant la surgélation (**300**) de la matière brute, un traitement thermique (**130**) de la matière brute est mis en œuvre à des températures entre 50 et 100°C.

7. Procédé selon la revendication 1 ou 2 ou 3 ou 4 ou 5 ou 6, **caractérisé en ce que,** avant la surgélation (**300**) de la matière brute, une désinfection (**120**) de la matière brute est mise en œuvre.

8. Ligne de production pour la fabrication de légumes tranchés surgelés, contenant des composants organiques non nécessaires sous la forme de peaux, comprenant: une ligne de prétraitement (**0000**),
une ligne pour enlever au moins partiellement mécaniquement les composants organiques non nécessaires (**0400**) et un poste de surgélation (**0300**)
**caractérisée en ce que:**
la ligne de prétraitement (**0000**) comprend en outre un poste de nettoyage de matière brute (**0100**) et un poste de tranchage de matière brute (**0200**) tandis qu'un poste de surgélation (**0300**) est situé entre une ligne de prétraitement (**0000**) et la ligne (**0400**) pour enlever au moins partiellement mécaniquement les composants organiques non nécessaires de telle sorte que l'enlèvement au moins partiellement mécanique des composants organiques non nécessaires soit mis en œuvre sur la matière brute tranchée et surgelée.

9. Ligne de production selon la revendication 8, **caractérisée en ce que** la ligne de prétraitement (**0000**) comprend une table d'inspection.

10. Ligne de production selon la revendication 8 ou 9, **caractérisée en ce que** la ligne de prétraitement (**0000**) comprend un poste de lavage de matière brute (**0110**).

11. Ligne de production selon la revendication 8 ou 9 ou 10, **caractérisée en ce que** la ligne de prétraitement **(0000)** comprend un poste de désinfection de matière brute **(0120).**

12. Ligne de production selon la revendication 8 ou 9 ou 10 ou 11, **caractérisée en ce que** le poste de surgélation comprend un poste choisi parmi: un tunnel de fluidisation et/ou une chambre de surgélation statique.

13. Ligne de production selon l'une quelconque des revendications 8 à 12, **caractérisée en ce que** la ligne pour enlever au moins partiellement mécaniquement **(0400)** les composants organiques non nécessaires comprend au moins un poste choisi parmi: un poste de secouage **(0410),** un poste pour le tri par air **(0415),** un poste pour le tri optique suivi par le soufflage d'air **(0420),** un poste pour le tri au laser suivi par le soufflage d'air **(0421),** un poste pour le tri en utilisant des diodes LED suivi par le soufflage d'air (**0422**).

14. Ligne de production selon l'une quelconque des revendications 8 à 13, **caractérisée en ce que** la ligne de prétraitement **(0000)** comprend un poste pour le traitement thermique **(0130)** de la matière brute à la température entre 50 et 100°C.
